# EUROPEAN PATENT APPLICATION

(11) **EP 2 757 638 A1**
(43) Date of publication of application: **23.07.2014**
(21) Application number: 11872443.4
(22) Date of filing: 15.11.2011
(51) Int. Cl.: H01R 13/502, H01Q 1/24, B60C 23/04, B60N 3/14

(54) **ANTENNA INSTALLATION STRUCTURE FOR MONITORING ASSEMBLY OF VEHICLE-MOUNTED POWER-DRAWING INTERFACE**

(30) Priority: 13.09.2011 CN 201110270192
(71) Applicant: Li, Zhitao, Zhongshan, Guangdong 528425 (CN); Steelmate Co., Ltd., Zhongshan, Guangdong 528425 (CN)
(72) Inventor: LI, Zhitao, Dongfeng Town Zhongshan, Guangdong 528425 (CN)
(74) Representative: Gulde & Partner
(86) International application number: PCT/CN2011/082228
(87) International publication number: WO 2013/037162

(57) **Abstract**

An antenna mounting structure for a monitoring component of an onboard power-taking port includes a power-taking component disposed inside a power-taking space of the port and engaged with the port so as to realize power taking, a control circuit powered by the power coming from the power-taking component, a carrier for carrying the control circuit, an antenna and a display unit both of which are electrically connected with the control circuit, and an enclosure member cooperative with the power-taking component so as to enclose the control circuit and display unit therein. The control circuit receives an external signal by the antenna and process the external signal so that the signal is provided to the display unit for displaying the same; a circular groove is defined in an external end of the power-taking component or defined in the enclosure member; and the antenna is placed into the circular groove.

## Description

### FIELD OF THE INVENTION

The present invention relates to an onboard equipment connective construction and more particularly, relates to an antenna mounting structure for a monitoring component of an onboard power-taking port.

### BACKGROUD OF THE INVENTION

Minimization of onboard equipment has direct influence on commercial promotion of the product. A tire pressure monitoring unit, which is small-sized, easy to be connected, has various functions, and is equipped with a display, will of course bring more successful commercial value, compared to another product which uses a large sized display and occupies large space.

Reference is made to Chinese Patent Application No. 101474973 disclosing an onboard equipment connective structure and an onboard display which partially fulfilled the above purposes. The improvement of it lies in external devices such as display are integrated by using a specific connective structure into a power-taking construction connected with a power-taking port located inside the cab. As such, these devices such as display can obtain electric power directly from the power-taking port inside the cab and perform other control functions, thereby realizing the same object without causing damage to cable connection layout.

A car power-taking port is also referred as to a car cigar lighter. The car cigar lighter defines internally a cylindrical room at the bottom of which a first connective electrode is disposed and at a cylindrical wall of which a second connective electrode of a power supply is disposed. A power-taking device is inserted into the cylindrical room and power-taking is performed by connecting of the device with both the first and second connective electrodes.

The dimension of a power-taking port is specified by industry standard. Accordingly, conventional idea is to make the power-taking device itself perform power obtaining function. For example, as illustrated in Chinese Patent Application No. CN101474973, the entire internal and external space occupied by the power-taking device are intended only for obtaining electric power, and no other function can be realized. As a result, external devices such as display and control circuits for these devices must be positioned on the outside of the power-taking device. Consequently, the whole product can't be reduced in size completely.

It is critical to know how to minimize the size of the equipment, get rid of conventional idea, and reasonably utilize space. To reasonably utilize space, every component inside the equipment should be re-arranged more effectively.

For equipment with control function such as tire pressure monitoring unit which receives signal from a tire pressure gauge, transforms the signal into readable information and then output the same information, to guarantee reliability of signal receiving and transmitting, the antenna should be distributed reasonably. Higher requirement regarding hiding and arrangement of the antenna will be presented once the equipments are required to be further reduced in dimension.

### SUMMARY OF THE INVENTION

The object of the present invention is to overcome the drawbacks of prior art technology and provide an antenna mounting structure for a monitoring component of an onboard power-taking port, thus ensuring that minimized monitoring component of the onboard power-taking port will be able to receive and transmit signal without mistakes.

To fulfill the above object, the present invention provides the following technical solution.

An antenna mounting structure for a monitoring component of an onboard power-taking port includes a power-taking component disposed inside a power-taking space of the port and engaged with the port so as to realize power taking, a control circuit powered by the power coming from the power-taking component, a carrier for carrying the control circuit, an antenna and a display unit both of which are electrically connected with the control circuit, and an enclosure member cooperative with the power-taking component so as to enclose the control circuit and display unit therein. The control circuit receives an external signal by the antenna and process the external signal so that the signal is provided to the display unit for displaying the same; a circular groove is defined in an external end of the power-taking component or defined in the enclosure member; and the antenna is placed into the circular groove.

Preferably, the circular groove has a threaded portion and correspondingly, the antenna also has a threaded portion. The circular groove is formed on an outer wall of the power-taking component or defined on an outer wall of the enclosure member.

Preferably, the enclosure member includes a lid assembled with the external end of the power-taking component; and the circular groove is formed in an outer or inner wall of the lid.

Preferably, the power-taking component includes an extension portion extending along the external end of the component; the extension portion is assembled with the enclosure member; and the circular groove is formed in an outer or inner wall of the extension.

Preferably, the power-taking component has a first receiving space into which the control circuit and carrier are disposed.

Furthermore, the enclosure member includes a protective cap for covering and enclosing the periphery of the display unit and permitting visible of a screen of the display unit.

In addition, the carrier and display unit are disposed at two opposite surfaces of a supporting disc respectively; and the supporting disc is secured in the first receiving space of the power-taking component at an axial location.

More preferably, the supporting disc is secured on a flange predefined on the inner wall of the power-taking component.

Specifically, the enclosure member and power-taking port are connected with each other by screw or snap-fitting.

Compared with prior art, the present invention has the following advantages.

Firstly, though the dimension of the monitoring component is further reduced, the antenna may still receive and transmit signals without any mistake and obstacle due to arrangement of the antenna and display unit into the external end of the power-taking component. Furthermore, the display unit is able to display related information intuitively to the passengers, thereby meeting requirement of monitoring. The generality of the present monitoring component is also improved due to reliable signal transmission and receiving of the antenna and accordingly, the monitoring component may find its application in other fields where communication among electronic devices is needed, including but not limited to the tire pressure monitoring system.

Secondly, the control circuit and its carrier are integrated into the first receiving space of the power-taking component. In addition, the antenna and display unit are located at the external end of the power-taking component. As such, the first receiving space is used more effectively, and the entire monitoring component is further reduced in size. For example, the length of the component is basically limited to be no larger than 1.5 times of the length of the power-taking port. Alternatively, the length of the component may be further limited to be the length of the port. As the size is significantly reduced, the monitoring component of the invention becomes more convenient for carrying, more easy to mount and therefore, more favorable.

### BRIEF DESCRIPTION OF THE DRAWINGS

Figure 1 shows a perspective view of a monitoring component of an onboard power-taking port according to a preferred embodiment of the present invention;
Figure 2 shows a perspective exploded view of the monitoring component of the onboard power-taking port according to a preferred embodiment of the present invention;
Figure 3 shows a cross-sectional view of the monitoring component of the onboard power-taking port according to a preferred embodiment of the present invention;
Figure 4 shows an exploded perspective view of a first power-taking electrode of the monitoring component of the onboard power-taking port according to a preferred embodiment of the present invention; and
Figure 5 shows a cross-sectional view of the monitoring component of the onboard power-taking port according to a preferred embodiment of the present invention, wherein top portion thereof has been removed to show internal construction of a power-taking component.

### DETAILED DESCRIPTION OF THE INVENTION

The various embodiments of the invention will be described in detail in conjunction with the accompanying drawings.

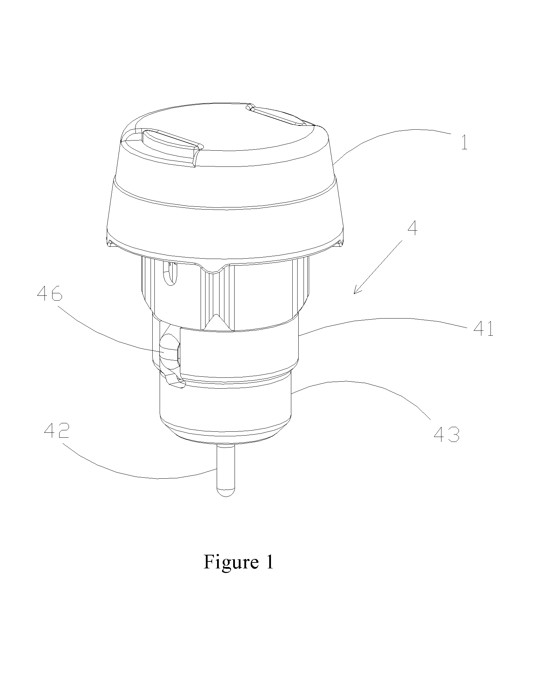

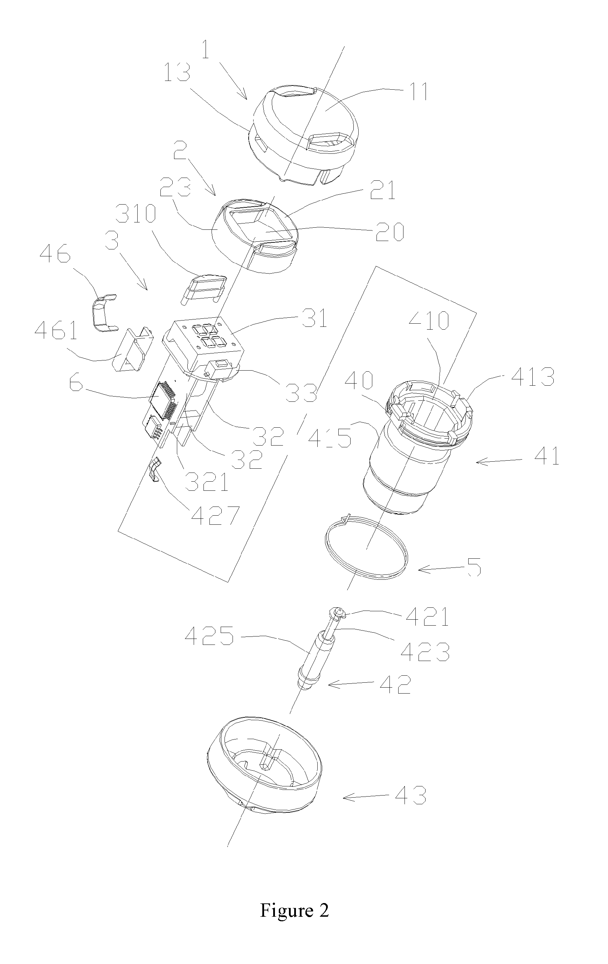

Reference is made to figures 1 and 2. It is noted that the antenna mounting structure for a monitoring component of an onboard power-taking port of the present invention is implemented based on the monitoring component of the onboard power-taking port. In a preferred embodiment of the invention, the monitoring component of the onboard power-taking port includes a power-taking component 4, a carrier 32, a control circuit 6, an antenna 5 and a display unit 31.

The power-taking component 4 is mounted together with a car power-taking port (also referred as to cigar lighter, not shown in the drawings). According to industry standard, the car power-taking port has a cylindrical power-taking space, on a cylindrical wall of which a metal member used as a second connective component is disposed, while in an axial interior portion of which another metal member used as a first connective component is disposed. Therefore, the power-taking component 4 is designed to be inserted suitably into the car power-taking port and maintain reliable contact with both of the first and second connective components respectively such that power is supplied to the power-taking component. Power-taking is performed by inserting the power-taking component 4 into the car power-taking port. Accordingly, one end which is inserted into the power-taking port, of the power-taking component 4 is defined as an internal end, while the opposite end thereof is defined as an outer end.

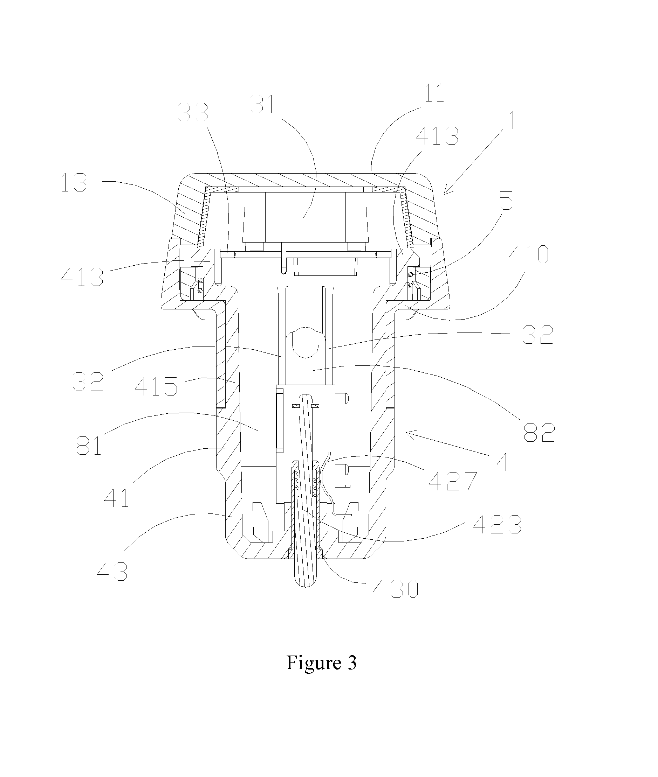

For the power-taking component 4 to meet the above requirements, reference is also made to figures 2 and 3. In a preferred embodiment of the invention, the power-taking component 4 is designed to have a main body (41, 43), a first power-taking electrode 42 and a second power-taking electrode 46. The main body (41, 43) is composed of a cylindrical member 41 and a bottom cap 43 both of which are assembled together. The bottom cap 43 and cylindrical member 41 may be assembled together by means of screw, snap fit, and the like. As such, a first receiving space is formed by assembling of the cylindrical member 41 and bottom cap 43. In addition, the first receiving space is also part of the power-taking space of the power-taking port. In the present invention, the first receiving space 81 also receives other components of the invention, in addition to the first power-taking electrode 42 and second power-taking electrode 46.

A through hole 430 is defined at an axial location of the bottom cap 43. The through hole 430 serves to contain the first power-taking electrode 42 such that the electrode 42 will pass the hole 430 and then be connected electrically and physically with the first connective member of the power-taking port. The detailed construction of the first power-taking electrode 42 and assembling relationship of it with the bottom cap 43 are discussed hereinafter. As shown in figure 3, a lateral hole is defined at a cylindrical wall of the cylindrical member 41 through which the second power-taking electrode 46 passes in order that the electrode 46 will be connected with a second connective member of the power-taking port electrically and physically. The second power-taking electrode 46 is positioned on a locating member 461. In addition, the locating member 461 is fixed to an inner wall of the power-taking component 4 so that the second power-taking electrode 46 is held on place. By this way, the second power-taking electrode 46 is prevented from dropping into interior of the first receiving space 81.

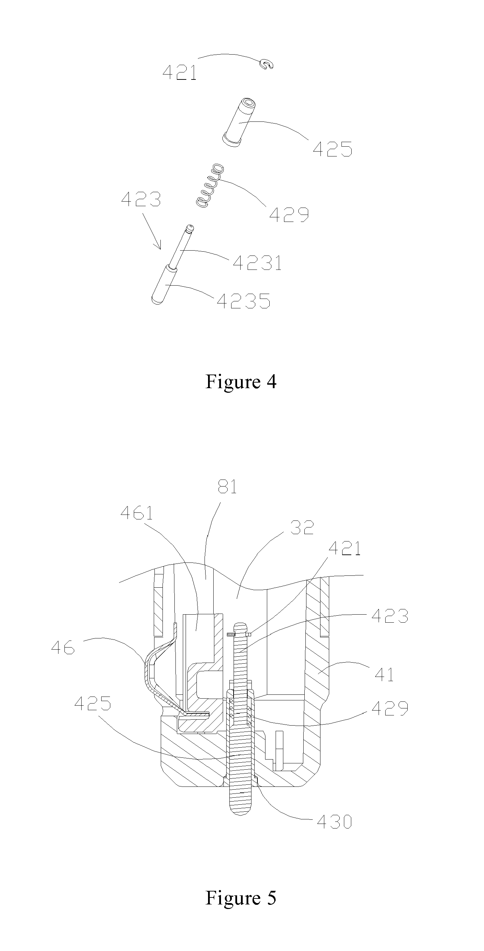

Reference is made to figures 2-4. The first power-taking electrode 42 is retractable and includes a sleeve 425, a cylindrical spring 429, a contacting member 423 and a circlip 421. The contacting member 423 includes a first portion 4235 and a second portion 4231 having smaller diameter than the first portion 4235. A circular groove is formed at a distal end of the second portion 4231. Moreover, the outer diameter of the second portion 4231 is smaller than the inner diameter of the cylindrical spring 429. One end of the sleeve 425 is opened and the other end thereof has a through hole defined therein. The second portion 4231 is inserted into the spring 429. The second portion 4231 of the contacting member 423 together with the spring 429 is placed into the sleeve 425. Part of the second portion 4231 runs outside the through hole of the sleeve 425. In addition, the circlip 421 is fitted into the circular groove of the second portion 4231, thus finishing assembling of the first power-taking electrode 42. It is apparent that the sleeve 425 of the first power-taking electrode 42 is secured on the bottom cap 43 such that one end of the contacting member 423 is exposed, while the other end thereof comes into the first receiving space 81. In this case, the contacting member 423 is capable of retract or extend when an axial force is applied thereon. When the force is applied axially toward the external end of the member 423, the member 423 will urge the cylindrical spring 429 such that the spring 429 is compressed into the first receiving space 81. When the force disappears, the contacting member 423 will return its original position under the resiliency of the spring 429. The monitoring component of the present invention can be adapted to power-taking ports with power-taking space of different depth due to retractable configuration.

Therefore, according to a preferred embodiment of the invention, when designing the construction of the first receiving space 81, we should consider providing a second receiving space 82 for receiving the contacting member 423. The monitoring component of the onboard power-taking port of the invention is able to adapt to various power-taking ports with different depth due to retractable configuration of the first power-taking electrode 42. However in another embodiment (not shown) of the invention, to adapt different depth of the power-taking ports, the length of the first power-taking electrode 42 is set to be constant. In addition, it is unnecessary for the electrode 42 to extend into the first receiving space 81. In this situation, there is no need for providing a second receiving space 82.

Referring to figures 2, 3 and 5, to further utilize the first receiving space 81 with higher effectiveness, two circuit boards 32 are used as the carrier 32 for mounting the control circuit 6 of the invention.

As indicated by name, the control circuit 6 functions to perform signal processing and supply the processed signal to the display unit 31 to display the signal. A typical application of the monitoring component of the onboard power-taking port of the invention is configured as part of a tire pressure monitoring system (not shown). That is, take the monitoring component as a monitoring unit of the tire pressure monitoring system. Signal representing tire pressure and/or tire temperature transmitted by the tire pressure gauge of the tire pressure monitoring system, is received by the control circuit 6 via the antenna 5, decoded, calculated, transformed into signal to be outputted by the display unit 31, and then is displayed by the unit 31 connected with the control circuit 6, thus realizing tire pressure monitoring. Here, to ensure that the antenna 5 can receive and transmit signal without malfunction, the display unit 31 should be able to display information without any obstacle. Consequently, it is not wise to arrange the display unit 31 close to the internal end of the power-taking component 4. The rest components of the control circuit 6 can be totally secured onto the two circuit boards 32. Of course, the number of the circuit boards 32 may be changed based on complexity of the control circuit 6. For example, one, three or four or even more circuit boards 32 may be provided as long as there is no influence on space utilization.

The monitoring component of the power-taking port of the invention may also have other applications such as for monitoring temperature inside the car, automobile gas and the like. Similar to the above typical application, in these applications, the antenna 5, control circuit 6 and display unit 31 may also be included and have the similar arrangement. Apparently, the monitoring component of the power-taking port of the invention has wide application.

In the present invention, the two circuit boards 32 contain part of the control circuit 6 respectively. The two circuit boards 32 are parallel with each other and are vertically disposed on the same plane of a supporting disc 33. The two circuit boards 32 are also supported by a connective member 321 such that balanced stable relationship is maintained between the two boards 32. The display unit 31 is secured on the other plane of the supporting disc 33. An indicator lamp 310 may also be provided on an upper surface of the supporting disc 33. Obviously, using the two planes of the supporting disc 33, the display unit 31, control circuit 6 and carrier 32 constitute a construction body 3. The supporting disc 33 may function as a divider of the construction body 3. In this case, the control circuit 6 and its carrier 32 are disposed into the first receiving space 81, whereas the display unit 31 is disposed at the external end of the power-taking component 4.

Reference is further made to figures 2, 3 and 5. To assemble the construction body 3 and power-taking component 4 together, an extension portion 413 with larger diameter is formed on the external end of the cylindrical member 41 of the power-taking component 4. A circular flange 410 is formed on the inner wall of the cylindrical member 41 at location between the extension portion 413 and a non-extension portion 415. Alternatively, the flange 410 may also be formed by naturally extending outwardly the diameter of the extension portion 413. The supporting disc 33 of the construction body 3 is located on the flange 410 directly or by an intermediate member. As such, the supporting disc 33 is held on the power-taking component 4. Namely, the supporting disc 33 may be regarded as the divider of the construction body 3. The control circuit 6 and circuit boards 32 are contained in the first receiving space 81, and it is ensured that the screen of the display unit 31 is exposed and can display information.

It can be seen from the present preferred embodiment that the specific location of the flange 410 on the cylindrical member 41 may have influence on the entire length of the monitoring component and the depth of the entire first receiving space 81. Based on the design illustrated in this preferred embodiment, the display unit 31 may have small thickness, and as such, when the monitoring component is inserted into the car power-taking port, the entire axial length of the monitoring component may be limited to be no longer than 1.5 times of the axial length of the power-taking space of the port. In another embodiment of the invention not shown, the length of the two circuit boards 32 is further shortened. In addition, the flange 410 is configured to be closer to the internal end of the power-taking component 4. Accordingly, the axial length of the entire monitoring component can be further limited to be no longer than the axial length of the power-taking space of the car power-taking port when the monitoring component is inserted into the port.

As described above, the spatial relationship and assembling relationship between the construction body 3 and power-taking component 4 is determined. As shown in figures 2 and 3, to realize connection of the first and second power-taking electrodes 42, 46 with the control circuit 6 so as to obtain electricity, the first power-taking electrode 42 is coupled to the control circuit 6 on the circuit board 32 via a first conductive piece 427. Similarly, the second power-taking electrode 46 is coupled to the control circuit 6 of the circuit board 32. It can be perceived that various other means may be used to realize connection of the first power-taking electrode 42 or second power-taking electrode 46. As such, as the respective distance between the electrodes 42, 46 and circuit board 32 is short, there may be flexible designs for the first and second electrodes 42, 46, and these designs should not be limited to the embodiments.

As illustrated above, in the present preferred embodiment, the first power-taking electrode 42 is designed to be retractable. Therefore, it is considered to provide a second receiving space 82 for accommodating the electrode 42. Based on the aforementioned construction body 3, in case that the carrier 32 is constructed of only one circuit board 32, the second receiving space 82 into which the retractable first power-taking electrode 42 is contained, is thus defined by biasing the circuit board 32 away from the axis of the entire cylindrical member 41. However, in case that the circuit board 32 is configured to have more components, these circuit boards 32 should be arranged around the supporting disc 33 and biased away from the axis. In this way, the second receiving space 82 is defined by a gap formed among these circuit boards 32 with the axis as the center of the gap. Apparently, the second receiving space 82 is part of the first receiving space 81 of the power-taking component 4, and is also part of the power-taking space of the power-taking port. In other words, the above three spaces overlap partially with each other.

Reference is further made to figures 2, 3 and 5. To protect the display unit 31 and according to a preferred embodiment of the invention, there is provided a protective cap 2 including a skirt portion 23 and a crown portion 21. An opening 20 of which the shape is similar to that of the unit 31 is defined in the crown portion 21. The protective cap 2 is secured to the supporting disc 33 by means of snap-fitting or screw. The screen of the display unit 31 is visible through the opening 20 after being assembled.

To reasonably arrange the antenna 5 so as to obtain the antenna mounting structure of the invention and make the antenna 5 receive and transmit signal with higher electrical performance, the antenna 5 should have a suitable length. In this preferred embodiment, a circular groove 40 is provided on an outer wall of the extension portion 413 of the external end of the cylindrical member 41. Furthermore, to maintain the length of the groove, the groove 40 is designed to have threaded portion. Correspondingly, the antenna 5 connected with the control circuit 6 is also configured to have threaded portion. Moreover, the antenna 5 is inserted into the circular groove 40 for hiding purposes. The antenna 5 having this design brings better impedance match performance and stable signal receiving/transmitting, thus ensure reliable interconnection among the monitoring component and other related electronic devices. Therefore, generality of the monitoring component of the invention is enhanced significantly. In other embodiments of the invention not shown, the circular groove 40 may also be defined in an inner wall of the extension portion 413 so long as it is able to receive external signal. Alternatively, the circular groove 40 may also be defined in other locations as will be discussed below.

To further ensure assembling reliability of the entire construction body 3 and power-taking component 4 and according to a preferred embodiment, a lid 1 is provided which includes a crown portion 11 made of transparent material. In other words, the lid 1 has a transparent top surface through which the light from the display unit 31 can penetrate and then be seen. An assembling structure is formed between an end surface of the extension portion 413 of the external end of the cylindrical member 41 and skirt portion of the lid 1. This assembling structure may be snap-fitting or screw structure. The lid 1 can be assembled with the extension portion 413 of the member 41 by above snap-fitting or screw manner, thus finishing the assembling of the entire monitoring component. Alternatively, to realize assembling between the lid 1 and member 41, various other manners may be used.

Clearly, the lid 1 and protective cap 2 constitute cooperatively an enclosure member for covering and protecting the display unit 31. It is noted that the specific structure of the enclosure member is not limited to the combination of the lid 1 and cap 2. For example, the enclosure member may only include a lid 1. Or, the lid 1 may be formed integrally with the protective cap. In a summary, the enclosure member may be designed with flexibility.

In an embodiment of the invention not shown, the axial length of the entire monitoring component is less than the axial length of the power-taking space of the car power-taking port. In this situation, there is no need to widen the diameter of the cylindrical member 41. Limited by the inner diameter of the power-taking space, it is suitable to position the threaded antenna 5 into the threaded circular groove predefined in the inner wall or outer wall of the skirt portion 13 of the lid 1. Selectively, the antenna 5 may also be disposed into the threaded circular groove predefined in the outer wall or inner wall of the skirt portion of the protective cap 2.

Summarily, the antenna mounting structure for a monitoring component of an onboard power-taking port provided by the invention has the advantages of compact design, stable signal transmitting/receiving, and enhanced generality. In addition, the above antenna mounting structure may find its application in many fields where readable monitoring is needed such as tire pressure monitoring system.

## Claims

1. An antenna mounting structure for a monitoring component of an onboard power-taking port, comprising a power-taking component disposed inside a power-taking space of the power-taking port and engaged with the power-taking port so as to realize power taking, a control circuit powered by the power coming from the power-taking component, a carrier for carrying the control circuit, an antenna and a display unit both of which are electrically connected with the control circuit, and an enclosure member cooperative with the power-taking component so as to enclose the control circuit and display unit therein, wherein the control circuit receives an external signal by the antenna and process the external signal so that the signal is provided to the display unit for displaying the same; a circular groove is defined in an external end of the power-taking component or is defined in the enclosure member; and the antenna is placed into the circular groove.

2. The antenna mounting structure for a monitoring component of an onboard power-taking port according to claim 1, wherein the circular groove has a threaded portion and correspondingly, the antenna also has a threaded portion.

3. The antenna mounting structure for a monitoring component of an onboard power-taking port according to claims 1 or 2, wherein the circular groove is formed on an outer wall of the power-taking component or defined on an outer wall of the enclosure member.

4. The antenna mounting structure for a monitoring component of an onboard power-taking port according to claim 3, wherein the enclosure member includes a lid assembled with the external end of the power-taking component; and the circular groove is formed in an outer or inner wall of the lid.

5. The antenna mounting structure for a monitoring component of an onboard power-taking port according to claim 4, wherein the power-taking component includes an extension portion extending along the external end of the component; the extension portion is assembled with the enclosure member; and the circular groove is formed in an outer or inner wall of the extension.

6. The antenna mounting structure for a monitoring component of an onboard power-taking port according to claim 3, wherein the power-taking component has a first receiving space into which the control circuit and carrier are disposed.

7. The antenna mounting structure for a monitoring component of an onboard power-taking port according to claim 3, wherein the enclosure member includes a protective cap for covering and enclosing the periphery of the display unit and permitting visible of a screen of the display unit.

8. The antenna mounting structure for a monitoring component of an onboard power-taking port according to claim 3, wherein the carrier and display unit are disposed at two opposite surfaces of a supporting disc respectively; and the supporting disc is secured in the first receiving space of the power-taking component at an axial location.

9. The antenna mounting structure for a monitoring component of an onboard power-taking port according to claim 8, wherein the supporting disc is secured on a flange predefined on the inner wall of the power-taking component.

10. The antenna mounting structure for a monitoring component of an onboard power-taking port according to claim 3, wherein the enclosure member and power-taking port are connected with each other by screw or snap-fitting.
